# FASCICULE DE BREVET EUROPEEN

(11) **EP 0 936 957 B1**
(45) Date de publication et mention de la délivrance du brevet: **20.12.2000**
(21) Numéro de dépôt: 98942809.9
(22) Date de dépôt: 01.09.1998
(51) Int. Cl.: B23Q 3/08, B23P 11/02, B23P 19/00

(54) **DISPOSITIF POUR L'ASSEMBLAGE ET LE DESASSEMBLAGE D'UN OUTIL AVEC UN PORTE-OUTILS**
VORRICHTUNG ZUM MONTIEREN UND DEMONTIEREN EINES WERKZEUGES MIT EINEM WERKZEUGHALTER
DEVICE FOR ASSEMBLING AND DISASSEMBLING A TOOL WITH A TOOL-HOLDER

(30) Priorité: 05.09.1997 FR 9711195
(43) Date de publication de la demande: 25.08.1999
(73) Titulaire: E.P.B. EMILE PFALZGRAF, S.A., 67330 Bouxwiller (FR)
(72) Inventeur: FREYERMUTH, Alain, F-67350 Pfaffenhoffen (FR)
(74) Mandataire: Nuss, Pierre
(86) Numéro de dépôt international: FR9801878
(87) Numéro de publication internationale: WO9912699

(56) Documents cités:
- EP-A- 0 437 322
- US-A- 5 280 671

## Description

La présente invention concerne le domaine des accessoires des machines-outils, en particulier des machines à commande numérique, des centres d'usinage, des machines ou lignes de transfert, pour l'usinage à grande vitesse ou pour lesquelles une grande précision de concentricité est requise, et a pour objet un dispositif d'assemblage et de désassemblage automatique d'outils avec un porte-outils par dilatation thermique de ce dernier.

Le principe du frettage est connu depuis fort longtemps, également dans le contexte de l'assemblage outil / porte-outils.

Ainsi, il existe actuellement des dispositifs de frettage porte-outils / outils avec intervention manuelle pour l'emmanchement, nécessitant la mise en rotation des porte-outils, d'autres qui ne garantissent pas un emmanchement complet sur la hauteur désirée (d'où risque de perte d'outil en usinage), et d'autres encore qui ne présentent pas la sécurité d'emploi indispensable à l'utilisation industrielle.

En outre, le chauffage du porte-outils ou de l'ensemble outil / porte-outils est réalisé actuellement soit par application directe d'une flamme, soit par projection d'un rayonnement calorique ou d'un flux d'air chaud ou encore par contact et conduction, la mise en oeuvre des deux premiers modes de chauffage étant souvent délicate en milieu industriel et le troisième mode de chauffage étant peu efficace et entraînant une durée de chauffage trop longue.

Par ailleurs, aucun des procédés ou dispositifs connus ne permet de limiter le chauffage à une valeur juste suffisante pour l'assemblage ou le désassemblage de l'outil d'avec le porte-outils.

Par le document US-A-5 280 671, on connaît un dispositif pour l'assemblage et le désassemblage d'un outil d'avec un porte-outils, tel que notamment un mandrin. Ce dispositif connu est essentiellement constitué par un bâti support pourvu d'un moyen de réception et de maintien d'un porte-outils et de moyens d'emmanchement et d'extraction d'un outil coopérant avec un moyen de chauffage, éventuellement par induction, de la partie du porte-outils destinée à recevoir l'outil par emmanchement.

Toutefois, ce document préconise un chauffage localisé, à savoir uniquement de la région de transition entre le porte-outils et l'outil, d'où il résulte un transfert thermique relativement lent, n'autorisant pas un montage / démontage rapide. En outre, le dispositif décrit dans ce document met en oeuvre des moyens de rotation du porte-outils pour réaliser l'emmanchement et l'extraction de l'outil.

La présente invention a pour but de pallier ces inconvénients en proposant notamment un dispositif d'assemblage et de désassemblage permettant le montage et le démontage des outils dans des conditions de sécurité optimales et de manière plus rapide et plus efficace qu'avec les dispositifs connus de l'état de la technique, tout en utilisant la température juste nécessaire à l'emmanchement (ou au désemmanchement) afin de ne pas endommager les porte-outils par surchauffe.

Ce but est atteint par l'invention grâce à un dispositif d'assemblage et de désassemblage présentant les caractéristiques de la revendication 1.

En effet, ces dernières permettent d'aboutir à un transfert thermique plus rapide puisque ce dernier est effectué simultanément dans toute la partie du porte-outils recevant l'outil.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et partiellement en coupe d'un dispositif d'assemblage et de désassemblage selon l'inventeur, et,
la figure 2 est une vue de détail en élévation latérale, et partiellement en coupe, à une échelle différente d'un induit de chauffage faisant partie du dispositif représenté à la revendication 1, et,
la figure 3 est une vue en coupe selon A-A d'un détail du dispositif représenté sur la figure 1.

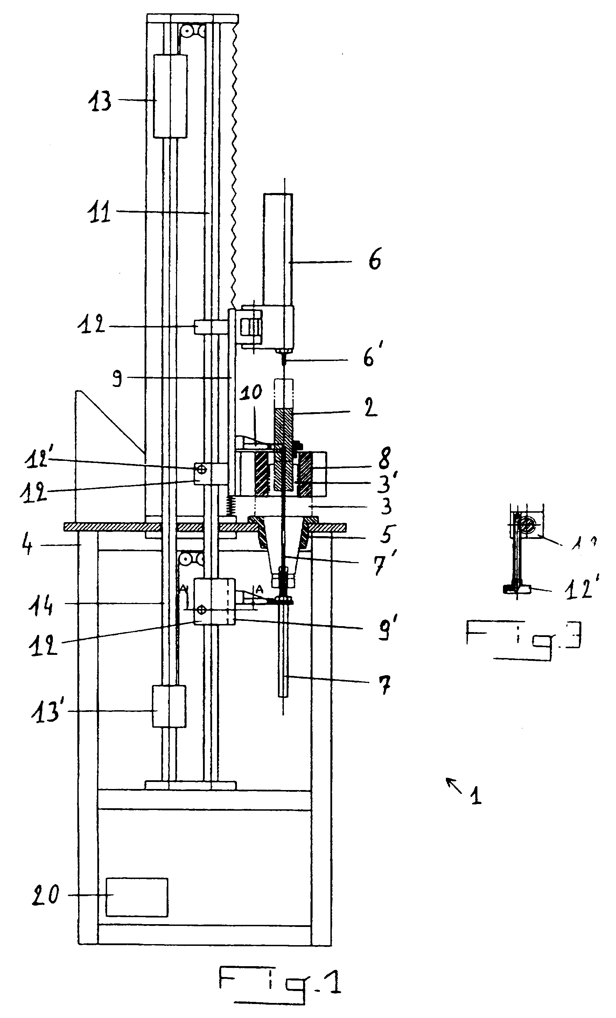

Conformément à l'invention, et comme le montre la figure 1 des dessins annexés, le dispositif 1 pour l'assemblage et le désassemblage d'un outil 2 d'avec un porte-outil 3, est essentiellement constitué par un bâti support 4 pourvu d'un moyen 5 de réception et de maintien d'un porte-outils 3 et de moyens 6 et 7 d'emmanchement et d'extraction d'un outil 2 coopérant avec un moyen 8 de chauffage par induction de la partie 3' du porte-outils 3 destiné à recevoir l'outil 2 par l'emmanchement

Le moyen 5 de réception et de maintien du porte-outils 3 pourra, par exemple, consister en une douille adaptée à la taille du porte-outils 3 concerné et munie de moyens de serrage, ou en un étau dont les mâchoires sont conformées pour venir en contact intime avec le corps d'un porte-outils 3.

L'emmanchement et, plus particulièrement, le désemmanchement de l'outil 2 d'avec le porte-outils 3 sont facilités lorsque ledit outil 2 présente une valeur de coefficient de dilatation thermique sensiblement plus faible que celle du porte-outils 3, et d'avantage encore lorsque l'outil 2 est réalisé en un matériau amagnétique ou faiblement magnétique.

Comme le montre la figure 1 des dessins annexés, le bâti support 4 ou banc présente préférentiellement une structure verticale et les moyens d'emmanchement 6 et d'extraction 7 et les moyens 8 de chauffage par induction sont montés, avec faculté de blocage en position, sur au moins un coulisseau 9, 9' solidaire du bâti support 4, en étant concentriques ou alignés avec l'axe longitudinal du porte-outils 3 monté dans le moyen 5 de réception et de maintien.

Selon une caractéristique de l'invention, les moyens d'emmanchement 6 et d'extraction 7 consistent en des actionneurs linéaires à actions mutuellement opposées prolongés par des organes de poussée 6', 7' destinés à venir en contact avec l'outil 2, et dont l'un 6 est situé au dessus et l'autre 7 en dessous du moyen 5 de réception et de maintien du porte-outils 3, un moyen 10 de maintien de l'outil 2 en alignement avec le porte-outils 3 et de guidage pendant l'emmanchement et le désemmanchement étant prévu entre le moyen 6 d'emmanchement et le moyen 5 de réception et de maintien du porte-outils 3, par exemple, sous la forme d'un porte-canons monté sur le coulisseau 9, 9' et équipé d'un canon adapté au diamètre de l'outil 2 à emmancher, et interchangeable.

Le blocage en position des moyens 6, 7, 8, et 10 sur le ou les coulisseau(x) 9, 9' pourra, par exemple, être réalisé au moyen d'un système du type tampon tangent et ledit ou lesdits coulisseau(x) 9, 9' présentent préférentiellement une structure profilée ou double ou dédoublée, par exemple sous la forme de deux barres parallèles espacées.

L'organe de poussée 6' du moyen d'emmanchement 6 pourra se présenter, par exemple, sous la forme d'un doigt, alors que l'organe de poussée 7' du moyen d'extraction 7 peut consister en une tige allongée, destinée à s'étendre à travers l'orifice central du porte-outils 3 et à venir se loger dans un orifice borgne adapté ménagé à la base de l'outil 2 (voir figure 1).

Afin de faciliter la mise en place et l'extraction du porte-outil 3 par rapport au moyen 5 de réception et de maintien, il peut être prévu que le moyen d'emmanchement 6 puisse être déplacé entre, d'une part, une position centrée d'utilisation dans laquelle il est aligné avec le porte-outils 3 monté dans le moyen 5 de réception et de maintien correspondant et, d'autre part, une position escamotée ou décalée angulairement de non utilisation dans laquelle il est situé en dehors du champ de dégagement vertical dudit porte-outils 3, ledit moyen 6 d'emmanchement pouvant être bloqué rigidement dans chacune des deux positions précitées.

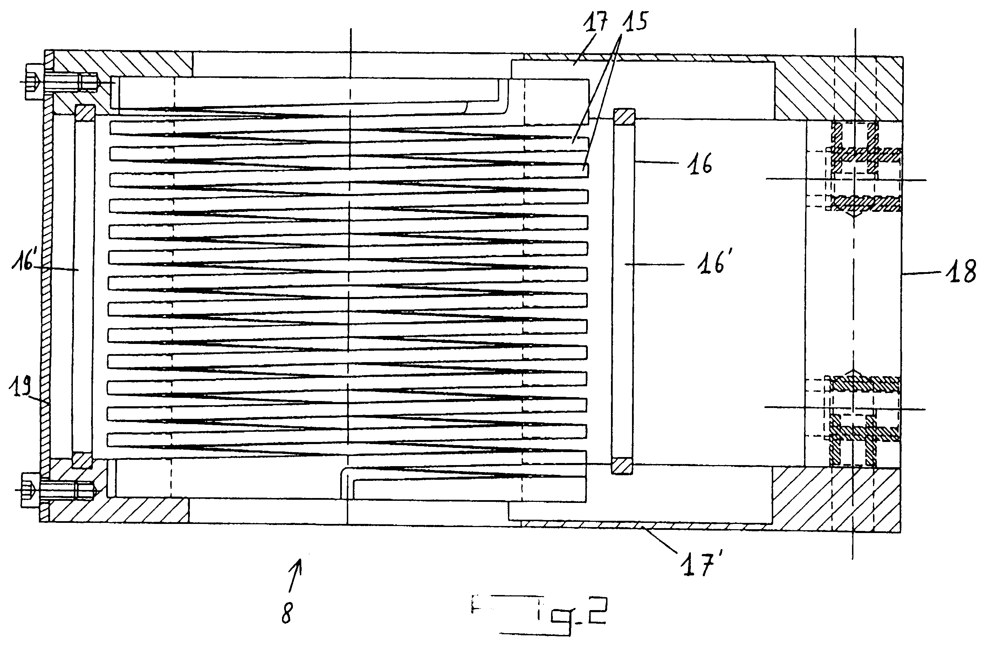

Conformément à l'invention, et comme représentée à la figure 1 et, plus particulièrement à la figure 2 des dessins annexés, le moyen 8 de chauffage par induction consiste en un induit tubulaire ou annulaire formé par une spire hélicoïdale 15 ou plusieurs spires hélicoïdales concentriques à section rectangulaire et destiné à entourer la partie 3' du porte-outils 3 recevant l'outil 2, sa hauteur étant au moins égale à celle de ladite partie 3' du porte-outils 3.

Selon un mode de réalisation préféré de l'invention, l'induit 8 est formé d'une unique spire hélicoïdale 15 dont la structure rectangulaire de la section est allongée ou orientée radialement.

Afin d'augmenter l'efficacité de l'induit 8 et de limiter les pertes magnétiques, l'induit tubulaire ou annulaire 8 peut être avantageusement entouré d'une cage 16 cylindrique concentrique en un matériau magnétique, comprenant des lumières ou des jours 16' allongé(e)s, orienté(e)s dans la direction de l'axe de l'induit tubulaire ou annulaire et réparti(e)s circonférentiellement de manière espacée.

Les jours en forme de fentes 16' ménagées dans la paroi cylindrique de la cage 16 annulaire divise ladite paroi en une pluralité de lames orientées parallèlement aux lignes de flux magnétique et favorise le rebouclage extérieur du champ produit par l'induit 8, tout en évitant les déperditions magnétiques pouvant provenir de lignes de flux non alignées.

La spire hélicoïdale 15 peut avantageusement présenter une quinzaine de tours et une section d'environ 20 mm², permettant le passage d'un courant d'environ 70 A et autorisant un chauffage de la partie 3' du porte-outils 3 à une température d'environ 200 à 250°C.

Comme le montre la figure 2 des dessins annexés la ou les spire(s) hélicoïdale(s) 15 et la cage cylindrique concentrique 16 sont solidarisées entre elles par deux flasques trouées 17 et 17' assemblés rigidement entre eux par une plaque de fixation 18, l'ensemble étant recouvert d'une enveloppe 19 en un matériau isolant amagnétique.

En vue d'autoriser un retrait rapide de l'ensemble porte-outils 3 / outil 2 après assemblage, le dispositif 1 selon l'invention peut comprendre en outre, un moyen de refroidissement in situ du porte-outils 3 après emmanchement de l'outil 2 tel que, par exemple, un système d'éjection ou de soufflage d'air, de vaporisation d'un gaz caloriporteur ou analogue.

Un déroulement contrôlé et automatique des opérations d'assemblage et de désassemblage peut être obtenu en prévoyant également une unité automatique de commande et de contrôle 20, tel que par exemple un automate programmable, pilotant la manoeuvre des moyens 6 et 7 d'emmanchement et d'extraction et gérant l'alimentation du moyen de chauffage par induction 8, en fonction notamment des mouvements relevés au niveau des moyens d'emmanchement 6 et/ou d'extraction 7 constamment en appui sous contrainte sur l'outil 2 tout au long des opérations d'assemblage et de désassemblage.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection des revendications.

## Revendications

1. Dispositif pour l'assemblage et le désassemblage d'un outil avec un porte-outils, tel que notamment un mandrin, essentiellement constitué par un bâti support (4) pourvu d'un moyen (5) de réception et de maintien d'un porte-outils (3), de moyens (6 et 7) d'emmanchement et d'extraction d'un outil (2) coopérant avec un moyen (8) de chauffage par induction de la partie (3') du porte-outils (3) destinée à recevoir l'outil (2) par emmanchement, dispositif caractérisé en ce que le moyen (8) de chauffage par induction consiste en un induit tubulaire ou annulaire formé par une spire hélicoïdale (15) ou plusieurs spires hélicoïdales concentriques et destiné à entourer la partie (3') du porte-outils (3) recevant l'outil (2), sa hauteur étant au moins égale à celle de ladite partie (3') du porte-outils (3).

2. Dispositif selon la revendication 1, caractérisé en ce que le bâti support (4) présente une structure verticale et en ce que les moyens d'emmanchement (6) et d'extraction (7) et les moyens (8) de chauffage par induction sont montés, avec faculté de blocage en position, sur au moins un coulisseau (9, 9') solidaire du bâti support (4), en étant concentriques ou alignés avec l'axe longitudinal du porte-outils (3) monté dans le moyen (5) de réception et de maintien.

3. Dispositif selon l'une quelconque des revendications 1 et 2, caractérisé en ce que les moyens d'emmanchement (6) et d'extraction (7) consistent en des actionneurs linéaires à actions opposées prolongés par des organes de poussée (6', 7') destinés à venir en contact avec l'outil (2), et dont l'un (6) est situé au dessus et l'autre (7) en dessous du moyen (5) de réception et de maintien du porte-outils (3), un moyen (10) de maintien de l'outil (2) en alignement avec le porte-outils (3) et de guidage pendant l'emmanchement et le désemmanchement étant prévu entre le moyen (6) d'emmanchement et le moyen (5) de réception et de maintien du porte-outils (3).

4. Dispositif selon l'une quelconque des revendications 2 et 3, caractérisé en ce qu'il comporte, d'une part, une partie de coulisseau supérieure (9) portant le moyen d'emmanchement (6), le moyen (8) de chauffage par induction et un moyen (10) de maintien aligné et de guidage de l'outil (2) et, d'autre part, une partie de coulisseau inférieure (9') portant le moyen (7) d'extraction, chacune desdites parties de coulisseau (9 et 9') étant montée coulissantes sur une structure profilée verticale (11) au moyen de bagues de guidage (12) pourvues d'organes de blocage en position (12') et contrebalancée par des contrepoids (13, 13') adaptées aux masses cumulées respectives de la partie de coulisseau considéré (9 ou 9') et du ou des moyens (7 ou 6, 8 et 10) qu'elle porte, lesdits contrepoids (13, 13') pouvant, le cas échéant, être montés coulissantes sur une seconde structure profilée verticale (14), parallèle à la structure profilée verticale (11) portant lesdites parties de coulisseau (9 et 9').

5. Dispositif selon l'une quelconque des revendications 2 à 4, caractérisé en ce que le moyen (6) d'emmanchement peut être déplacé entre, d'une part, une position centrée d'utilisation dans laquelle il est aligné avec le porte-outils (3) monté dans le moyen (5) de réception et de maintien correspondant et, d'autre part, une position escamotée ou décalée angulairement de non utilisation dans laquelle il est situé en dehors du champ de dégagement vertical dudit porte-outils (3), ledit moyen (6) d'emmanchement pouvant être bloqué rigidement dans chacune des deux positions précitées.

6. Dispositif selon l'une quelconque des revendications 1 à 5, caractérisé en ce que la ou les spire(s) hélicoïdale(s) (15) présentent) une section rectangulaire.

7. Dispositif selon la revendication 6, caractérisé en ce que l'induit (8) est formé d'une unique spire hélicoïdale (15) dont la structure rectangulaire de la section est allongée radialement

8. Dispositif selon l'une quelconque des revendications 6 à 7, caractérisé en ce que l'induit tubulaire ou annulaire (8) est entouré d'une cage (16) cylindrique concentrique en un matériau magnétique, comprenant des lumières ou des jours (16') allongé(e)s, orienté(e)s dans la direction de l'axe de l'induit (8) tubulaire ou annulaire et réparti(e)s circonférentiellement de manière espacée.

9. Dispositif selon la revendication 8, caractérisé en ce que la ou les spire(s) hélicoïdale(s) (15) et la cage cylindrique concentrique (16) sont solidarisées entre elles par deux flasques trouées (17, 17') assemblés rigidement entre eux par une plaque de fixation (18), l'ensemble étant recouvert d'une enveloppe (19) en un matériau isolant amagnétique.

10. Dispositif selon l'une quelconque des revendications 1 à 9, caractérisé en ce qu'il comprend, en outre, un moyen de refroidissement in situ du porte-outils (3) après emmanchement de l'outil (2) tel que, par exemple, un système d'éjection ou de soufflage d'air, de vaporisation d'un gaz caloriporteur ou analogue.

11. Dispositif selon l'une quelconque des revendications 1 à 10, caractérisé en ce qu'il comporte également une unité automatique de commande et de contrôle (20), tel que par exemple un automate programmable, pilotant la manoeuvre des moyens (6 et 7) d'emmanchement et d'extraction et gérant l'alimentation du moyen de chauffage par induction (8), en fonction notamment des mouvements relevés au niveau des moyens d'emmanchement (6) et/ou d'extraction (7) constamment en appui sous contrainte sur l'outil (2) tout au long des opérations d'assemblage et de désassemblage.

## Patentansprüche

1. Vorrichtung zum Zusammen- und Auseinanderbauen eines Werkzeugs, welches einen Werkzeugträger umfaßt, insbesondere ein Futter, welche im wesentlichen umfaßt: einen Tragrahmen (4), der eine Aufnahme- und Halteeinrichtung (5) für einen Werkzeugträger (3) und eine Einsetz- und Entnahmeeinrichtung (6 und 7) für ein Werkzeug (2) weist, welche mit einer Induktions-Heizeinrichtung (8) für den zur Aufnahme des Werkzeugs (2) durch Einsetzen bestimmten Abschnitt (3') des Werkzeugträgers (3) zusammenwirkt, dadurch gekennzeichnet, daß die Induktions-Heizeinrichtung (8) eine rohr- oder ringförmige Wicklung umfaßt, die durch eine wendelförmige Windung (15) oder mehrere konzentrische wendelförmige Windungen gebildet ist und dazu bestimmt ist, den Abschnitt (3') des Werkzeugträgers (3), der das Werkzeug (2) aufnimmt, zu umgeben, wobei ihre Höhe wenigstens gleich groß ist wie die des vorgenannten Abschnitts (3') des Werkzeugträgers (3).

2. Vorrichtung nach Anspruch 1, dadurch gekennzeichnet, daß der Tragrahmen (4) einen vertikalen Aufbau aufweist und daß die Einsetzeinrichtung (6) und die Entnahmeeinrichtung (7) und die Induktions-Heizeinrichtung (8) positionsverriegelbar auf mindestens einer Führungseinrichtung (9, 9') montiert sind, die mit dem Tragrahmen (4) verbunden ist, wobei sie zur longitudinalen Achse des Werkzeugträgers (3), der in der Aufnahme- und Halteeinrichtung (5) montiert ist, konzentrisch oder mit dieser ausgefluchtet sind.

3. Vorrichtung nach Anspruch 1 oder 2, dadurch gekennzeichnet, daß die Einsetzeinrichtung (6) und die Entnahmeeinrichtung (7) Linearantriebe mit entgegengesetzter Arbeitsrichtung umfassen, die durch Schubelemente (6', 7') verlängert sind, die dazu vorgesehen sind, mit dem Werkzeug (2) in Kontakt zu kommen, und von denen das eine (6) oberhalb und das andere (7) unterhalb der Aufnahme- und Halteeinrichtung (5) des Werkzeugträgers (3) angeordnet ist, wobei eine Einrichtung (10) zur Erhaltung der Ausrichtung des Werkzeugs (2) zu dem Werkzeugträger (3) und zur Führung während des Einsetzens und des Entnehmens zwischen der Einsetzeinrichtung (6) und der Aufnahme- und Halteeinrichtung (5) des Werkzeugträgers (3) vorgesehen ist.

4. Vorrichtung nach Anspruch 2 oder 3, dadurch gekennzeichnet, daß sie aufweist: einerseits einen oberen Teil (9) der Führungseinrichtung, der die Einsetzeinrichtung (6), die Induktions-Heizeinrichtung (8) und eine Einrichtung (10) zur Erhaltung der Ausrichtung und zur Führung des Werkzeugs (2) trägt, und andererseits einen unteren Teil (9') der Führungseinrichtung, der die Entnahmeeinrichtung (7) trägt, wobei jeder der Teile (9 und 9') der Führungseinrichtung an einem vertikalen Profilelement (11) mit Hilfe von Führungsringen (12) verschiebbar angeordnet ist, die mit Positionsverriegelungselementen (12') versehen sind, und durch Gegengewichte (13, 13') ausbalanciert ist, die auf die entsprechende Gesamtmasse der jeweiligen Führungseinrichtung (9 oder 9') und der oder den Einrichtungen (7 oder 6, 8 und 10), die durch sie getragen wird bzw. werden, abgestimmt sind, wobei die Gegengewichte (13, 13') gegebenenfalls verschiebbar an einem zweiten vertikalen Profilelement (14) angebracht sein können, das sich parallel zu dem vertikalen Profilelement (11) erstreckt, welches die Führungsabschnitte (9 und 9') trägt.

5. Vorrichtung nach einem der Ansprüche 2 bis 4, dadurch gekennzeichnet, daß die Einsetzeinrichtung (6) verlagert werden kann zwischen einerseits einer zentrierten Betriebsstellung, in der sie mit dem Werkzeugträger (3), der in der entsprechenden Aufnahme- und Halteeinrichtung (5) angebracht ist, ausgefluchtet ist, und andererseits einer eingefahrenen oder verschwenkten Ruhestellung, in der sie außerhalb des vertikalen Freiraums des Werkzeugträgers (3) angeordnet ist, wobei die Einsetzeinrichtung (6) in jeder der beiden genannten Stellungen starr verriegelt werden kann.

6. Vorrichtung nach einem der Ansprüche 1 bis 5, dadurch gekennzeichnet, daß die wendelförmige(n) Windung(en) (15) einen rechteckigen Querschnitt aufweist/aufweisen.

7. Vorrichtung nach Anspruch 6, dadurch gekennzeichnet, daß die Wicklung (8) als einzelne wendelförmige Windung (15) gebildet ist, deren rechteckige Querschnittsgeometrie in radialer Richtung verlängert ist.

8. Vorrichtung nach Anspruch 6 oder 7, dadurch gekennzeichnet, daß die rohr- oder ringförmige Wicklung (8) von einem konzentrischen zylindrischen Käfig (16) aus einem magnetischen Material umgeben ist, welcher längliche Öffnungen (16') aufweist, die in Richtung der Achse der rohr- oder ringförmigen Wicklung (8) orientiert sind und in Umfangsrichtung voneinander beabstandet verteilt sind.

9. Vorrichtung nach Anspruch 8, dadurch gekennzeichnet, daß die wendelförmige(n) Windung(en) (15) und der konzentrische zylindrische Käfig (16) miteinander durch zwei gelochte Flansche (17, 17') verbunden sind, die untereinander über eine Befestigungsplatte (18) starr verbunden sind, wobei die Anordnung durch eine Umhüllung (19) aus einem nicht magnetischen isolierenden Material abgedeckt ist.

10. Vorrichtung nach einem der Ansprüche 1 bis 9, dadurch gekennzeichnet, daß sie ferner umfaßt: eine Einrichtung zum in-situ-Kühlen des Werkzeugträgers (3) nach dem Einsetzen des Werkzeugs (2), wie z. B. eine Luftabgabedüsenanordnung, ein Luftgebläse oder ein System zum Verdampfen eines wärmeaufnehmenden Gases oder dgl.

11. Vorrichtung nach einem der Ansprüche 1 bis 10, dadurch gekennzeichnet, daß sie ferner eine automatische Steuer- und Kontrolleinheit (20) aufweist, wie z. B. eine programmierbare Einrichtung, die den Betrieb der Einsetz- und Entnahmeeinrichtung (6 und 7) steuert und die Speisung der Induktions-Heizeinrichtung (8) durchführt, insbesondere in Abhängigkeit von Bewegungen im Bereich der Einsetzeinrichtung (6) und/oder der Entnahmeeinrichtung (7), welche während des gesamten Zusammenbau- und Auseinanderbauvorgangs in kraftschlüssiger Anlage zum Werkzeug (2) stehen.

## Claims

1. Device for assembling and disassembling a tool with a tool-holder such as, in particular, a chuck, essentially consisting of a support frame (4) provided with a means (5) for receiving and holding a tool-holder (3), with means (6 and 7) for fitting and extracting a tool (2) cooperating with a means (8) for induction heating of the part (3') of the tool-holder (3) intended to receive the tool (2) by fitting, the device being characterised in that the induction heating means (8) consists of a tubular or annular armature formed by a helical winding (15) or a plurality of concentric helical windings and intended to surround the part (3') of the tool-holder (3) receiving the tool (2), its height being at least equal to that of said part (3') of the tool-holder (3).

2. Device according to claim 1, characterised in that the support frame (4) has a vertical structure and in that the fitting means (6) and extraction means (7) and the induction heating means (8) are mounted, with the ability of locking in position, on at least one slider (9, 9') integral with the support frame (4), while being concentric or aligned with the longitudinal axis of the tool-holder (3) mounted in the receiving and holding means (5).

3. Device according to any of claims 1 and 2, characterised in that the fitting means (6) and extraction means (7) consist of opposing-action linear actuators extended by thrust components (6', 7') intended to come into contact with the tool (2), of which one (6) is located above and the other (7) below the means (5) for receiving and holding the tool-holder (3), a means (10) for holding the tool (2) in alignment with the tool-holder (3) and for guidance during fitting and removal being provided between the fitting means (6) and the means (5) for receiving and holding the tool-holder (3).

4. Device according to any of claims 2 and 3, characterised in that it comprises, on the one hand, an upper slider portion (9) carrying the fitting means (6), the induction heating means (8) and a means (10) for aligned holding and guidance of the tool (2) and, on the other hand, a lower slider portion (9') carrying the extraction means (7), each of said slider portions (9 and 9') being mounted so as to slide on a vertical profiled structure (11) by means of guide rings (12) provided with components for locking in position (12') and counterbalanced by counterweights (13, 13') adapted to the respective cumulative masses of the slider portion under consideration (9 or 9') and of the means (7 or 6, 8 and 10) which it carries, said counterweights (13, 13') being adapted, if applicable, to be mounted so as to slide on a second vertical profiled structure (14) parallel to the vertical profiled structure (11) carrying said slider portions (9 and 9').

5. Device according to any of claims 2 to 4, characterised in that the fitting means (6) can be displaced between, on the one hand, a centred position for use in which it is aligned with the tool-holder (3) mounted in the corresponding receiving and holding means (5) and, on the other hand, a retracted or angularly offset position of non-use in which it is located outside the vertical field of release of said tool-holder (3), said fitting means (6) being adapted to be locked rigidly in each of the two aforementioned positions.

6. Device according to any of claims 1 to 5, characterised in that the helical winding or windings (15) have a rectangular cross-section.

7. Device according to claim 6, characterised in that the armature (8) is formed by a single helical spiral (15) of which the rectangular structure of the cross-section is radially elongated.

8. Device according to any of claims 6 to 7, characterised in that the tubular or annular armature (8) is surrounded by a concentric cylindrical cage (16) made of a magnetic material comprising elongate ports or apertures (16') oriented in the direction of the axis of the tubular or annular armature (8) and distributed circumferentially in a spaced manner.

9. Device according to claim 8, characterised in that the helical winding or windings (15) and the concentric cylindrical cage (16) are connected to one another by two perforated end plates (17, 17') rigidly connected to one another by a fixing plate (18), the assembly being covered by a casing (19) made of an amagnetic insulating material.

10. Device according to any of claims 1 to 9, characterised in that it also comprises a means for cooling the tool holder (3) *in situ* after fitting of the tool (2) such as, for example, a system for ejection or blowing of air, for vaporisation of a heat-carrying gas or the like.

11. Device according to any of claims 1 to 10, characterised in that it also comprises an automatic control and monitoring unit (20) such as, for example, a programmable controller, controlling operation of the fitting and extraction means (6 and 7) and managing the supply to the induction heating means (8) as a function, in particular, of the movements recorded in the region of the fitting means (6) and/or extraction means (7) resting constantly under stress on the tool (2) throughout the assembly and disassembly operations.
